# EUROPÄISCHE PATENTSCHRIFT

(11) **EP 1 925 911 B1**
(45) Veröffentlichungstag und Bekanntmachung des Hinweises auf die Patenterteilung: **22.12.2010**
(21) Anmeldenummer: 07021447.3
(22) Anmeldetag: 05.11.2007
(51) Int. Cl.: G01C 15/00

(54) **Kreuzlasergerät für das Verlegen von platten- oder brettförmigen Bodenbelagselementen**
Laser cross device for laying panel or board-shaped floor covering elements
Appareil laser croisé pour la pose d'éléments d'armature au sol en forme de plaque ou planche

(30) Priorität: 24.11.2006 AT 19552006
(43) Veröffentlichungstag der Anmeldung: 28.05.2008
(73) Patentinhaber: SOLA-Messwerkzeuge GmbH, 6840 Götzis (AT)
(72) Erfinder: Scheyer, Wolfgang, 6840 Götzis (AT)
(74) Vertreter: Hofmann, Ralf U.

(56) Entgegenhaltungen:
- WO-A-2006/125463
- US-A- 5 218 770
- WESTFALIA WERKZEUGCOMPANY GMBH: "Kreuzlinienlaser Nr 690487" BEDIENUNGSLANLEITUNG, [Online] 12. Oktober 2005 (2005-10-12), Seiten 1-6, XP002546093 Hagen Gefunden im Internet: URL:http://www3.westfalia.de/shops/werkzeu g/handwerkzeuge/messen_ausrichten_markiere n/laser_geraete/238399-westfalia_kreuzlase r.htm?vbSESSID=80d83d99bd74b9d0d1e1370aae0 1efb8> [gefunden am 2009-09-16]

## Beschreibung

Die Erfindung bezieht sich auf ein Kreuzlasergerät für das Verlegen von platten- oder brettförmigen Bodenbelagselementen, insbesondere Fliesen, auf einem ebenen Untergrund, mit einem auf dem Untergrund aufstellbaren Gehäuse, innerhalb von dem zumindest ein erster und ein zweiter Laser angeordnet sind, von denen durch erste und zweite vordere Lichtauslässe des Gehäuses aus diesem austretende erste und zweite Laserstrahlen zur Ausbildung von ersten und zweiten Markierungslinien auf dem Untergrund erzeugbar sind, welche sich an einem von den Lichtauslässen beabstandeten Kreuzungspunkt im rechten Winkel kreuzen.

Derartige Kreuzlasergeräte sind z. B. unter dem Handelsnamen Westfalia Kreuzlinienlaser erhältlich und werden für das Verlegen von Bodenbelagselementen, beispielsweise Fliesen verwendet. Herkömmlicherweise befindet sich der Kreuzungspunkt der von den Laserstrahlen auf dem Untergrund dargestellten Markierungslinien bzw. ihrer Verlängerungen knapp vor dem Gehäuse des Kreuzlasergeräts. Neben Kreuzlasergeräten, die nur zwei Laser aufweisen, sind auch Kreuzlasergeräte bekannt geworden, bei denen dritte und vierte Laser auf der vom Kreuzungspunkt der ersten und zweiten Markierungslinien bzw. ihrer Verlängerungen abgewandten Seite des Gehäuses dritte und vierte Laserstrahlen aussenden, welche Markierungslinien darstellen, die mit den ersten und zweiten Markierungslinien auf der andern Seite des Gehäuses in einer gemeinsamen Geraden liegen.

Der unter dem Handelsnamen Westfalia bekannte Kreuzlinienlaser hat den Nachteil, dass das Gerät an sich neben dem Bereich aufgestellt werden muss, in dem die brettförmigen Bodenbelagselemente wie z.B. Fliesen verlegt werden. Dies ist in beengten Bereichen z.B. in der Nähe von Mauern und in Ecken oft nicht möglich, da dort hierfür der Platz fehlt. Das selbe Problem ergibt sich auch bei dem gattungsgemäßen Kreuzlasergerät, welches aus der nachveröffentlichten WO 2006/125463 A1 bekannt ist.

Die US 5,218,770 A offenbart ein gattungsfremdes Vermessungsgerät für Baustellen, welches auf der Baustelle auf einem Dreibein aufzustellen ist, aber grundsätzlich nicht dazu vorgesehen ist, als Hilfsmittel beim Verlegen von Platten oder brettförmigen Bodenbelagselementen eingesetzt zu werden.

Aufgabe der Erfindung ist es, ein verbessertes Kreuzlasergerät der eingangs genannten Art bereitzustellen, durch welches die Verlegung von Bodenbelagselementen, beispielsweise Fliesen, erleichtert wird.

Erfindungsgemäß gelingt dies bei einem Kreuzlasergerät der oben genannten Art, indem das Gehäuse mittels Füßen des Kreuzlasergerätes auf dem Untergrund aufstellbar ist, wodurch eine Unterseite des Gehäuses vom Untergrund beabstandet ist, wenn das Gehäuse mittels der Füße auf dem Untergrund aufgestellt ist, wobei sich unterhalb des Gehäuses von einem ersten Seitenrand des Gehäuses zumindest bis zu einer ersten Vertikalebene, in der der erste Laserstrahl liegt, ein erster Freiraum erstreckt, der sich durchgehend über den gesamten zwischen der ersten Vertikalebene und dem benachbarten ersten Seitenrand liegenden Bereich ausdehnt, und dass sich unterhalb des Gehäuses von einem zweiten Seitenrand des Gehäuses zumindest bis zu einer zweiten Vertikalebene, in der der zweite Laserstrahl liegt, ein zweiter Freiraum erstreckt, der sich durchgehend über den gesamten zwischen der zweiten Vertikalebene und dem benachbarten zweiten Seitenrand liegenden Bereich ausdehnt.

Das Kreuzlasergerät gemäß der Erfindung weist mittels der Füße des Kreuzläsergerätes unterhalb des Gehäuses erste und zweite Freiräume auf. Ein jeweiliger Freiraum erstreckt sich durchgehend unterhalb der gesamten Ausdehnung des Gehäuses, in denjenigen von der jeweiligen Vertikalebene abgegrenzten Halbraum, in welchem der dieser Vertikalebene benachbarte Seitenrand des Gehäuses sich befindet. Diese Freiräume ermöglichen ein Einschieben von einem oder mehreren Bodenbelagselementen oder Abschnitten von diesen unter das Gehäuse bis zur jeweiligen Vertikalebene, und zwar über die gesamte horizontale Länge einer jeweiligen Vertikalebene, über welche die Vertikalebene das Gehäuse durchsetzt. Das Ausrichten der Bodenbelagselemente an den Markierungslinien oder ihren gedachten Verlängerungen in den Bereich unterhalb des Gehäuses wird dadurch erleichtert. Die Höhe dieser Freiräume ist hierbei an die zu verlegenden Bodenbelagselemente angepasst. Günstigerweise beträgt die Höhe der Freiräume über deren gesamte Ausdehnung mindestens 7 mm, vorzugsweise mehr als 10 mm, wobei ein Einschieben von üblichen Fliesen ermöglicht wird, auch bei aufgetragener Kleberschicht.

Es ist bevorzugt, dass die Abstände zwischen den ersten und zweiten Lichtaustritten und dem Kreuzungspunkt jeweils mindestens 30 mm, vorzugsweise mindestens 50 mm betragen. Die Verlegearbeiten werden dadurch weiter erleichtert.

In einer vorteilhaften Ausführungsform der Erfindung weist das Kreuzlasergerät weiters dritte und vierte Laser zur Erzeugung von dritten und vierten Laserstrahlen auf, die durch hintere dritte und vierte Lichtaustritte aus dem Gehäuse austreten und von denen auf dem Untergrund dritte und vierte Markierungslinien ausbildbar sind. Die dritte Markierungslinie liegt hierbei mit der ersten Markierungslinie in einer gemeinsamen Geraden und die vierte Markierungslinie liegt mit der zweiten Markierungslinie in einer gemeinsamen Geraden.

Weitere Vorteile und Einzelheiten der Erfindung werden im Folgenden anhand der beiliegenden Zeichnung erläutert. In dieser zeigen:

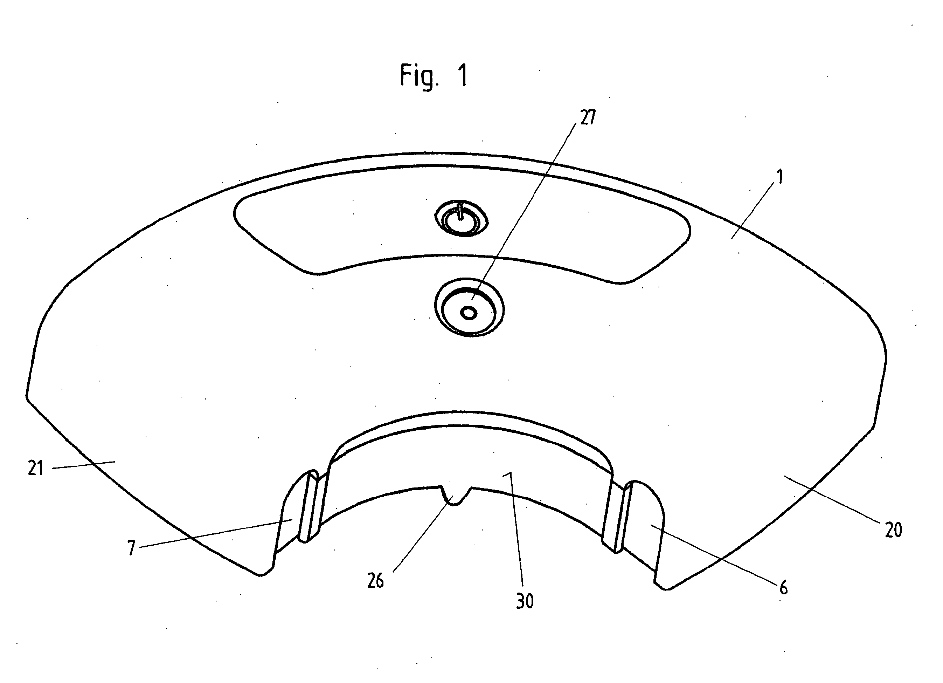

Fig. 1 eine Schrägsicht eines Kreuzlasergeräts gemäß der Erfindung;

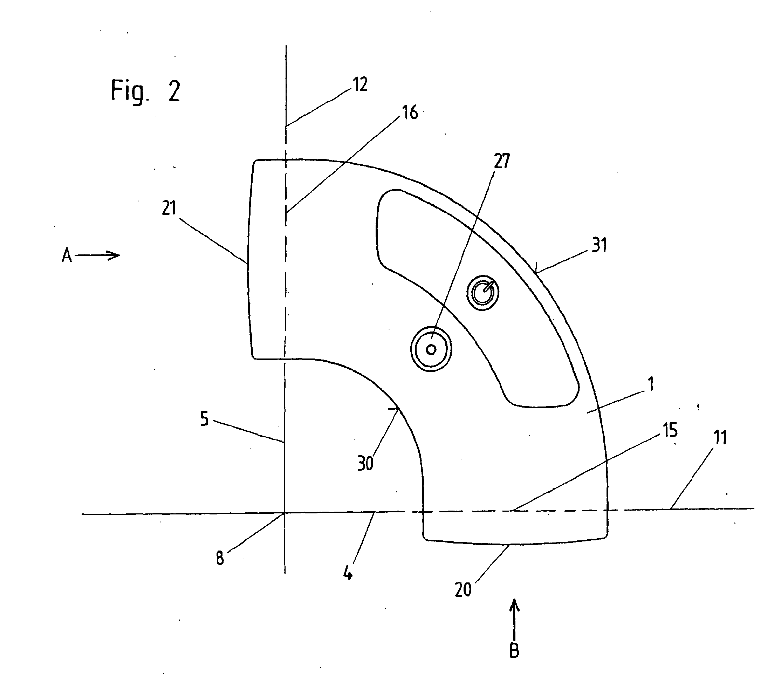

Fig. 2 eine Draufsicht mit eingeschalteten Lasern;

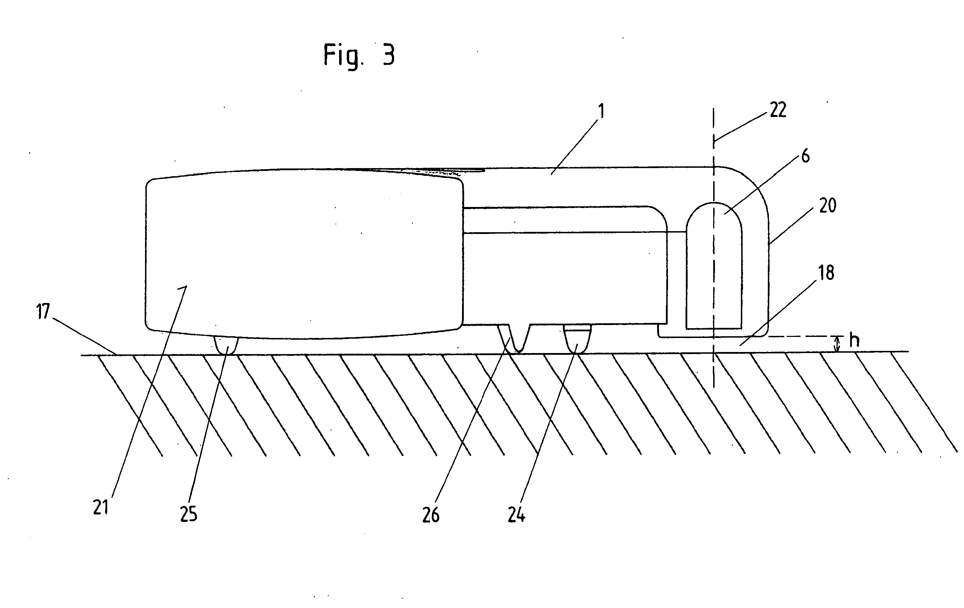

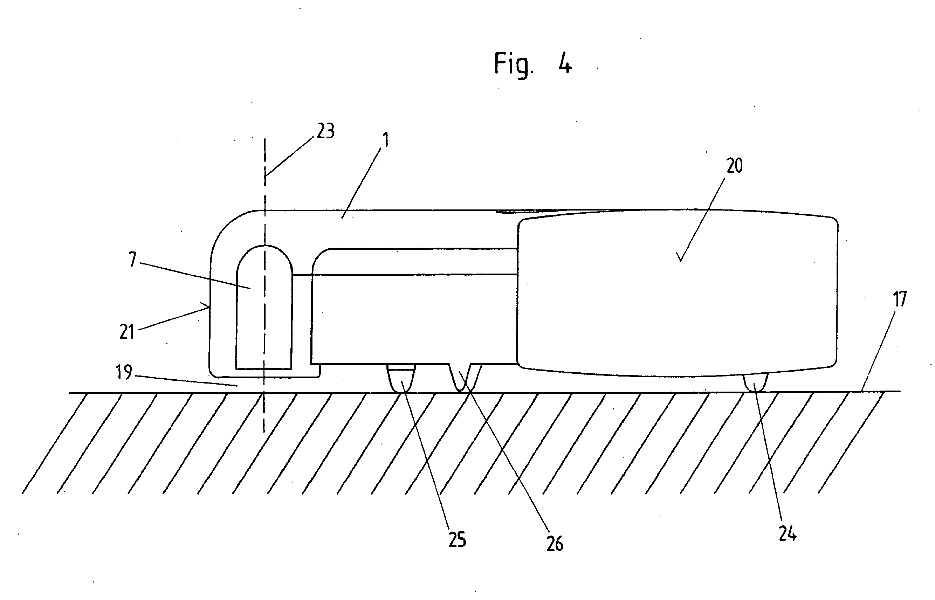

Fig. 3 und Fig. 4 Seitenansichten in Richtung der Pfeile A und B von Fig. 2;

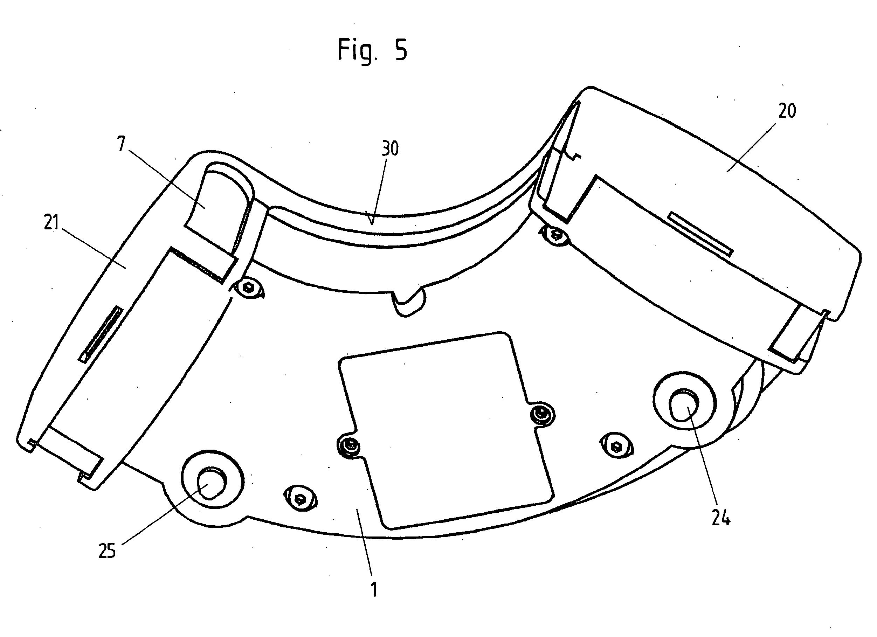

Fig. 5 eine Schrägsicht von schräg unten;

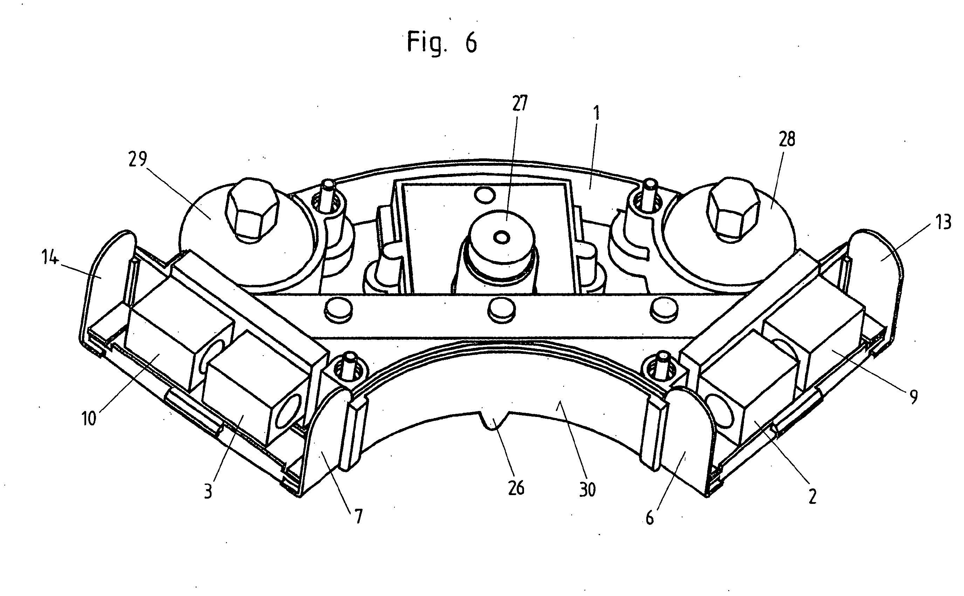

Fig. 6 eine Schrägsicht analog Fig. 1, aber ohne die obere Gehäuseschale.

Ein Ausführungsbeispiel eines Kreuzlasergeräts gemäß der Erfindung ist in den Figuren dargestellt. Das Kreuzlasergerät umfasst ein Gehäuse 1, innerhalb von dem erste und zweite Laserdioden aufweisende Laser 2, 3 zur Erzeugung von ersten und zweiten Laserstrahlen 4, 5 angeordnet sind. Die ersten und zweiten Laserstrahlen treten durch erste und zweite vordere Lichtauslässe 6, 7 aus dem Gehäuse 1 aus. Diese Lichtauslässe 6, 7 werden von Fenstern gebildet. Durch eine geneigte Anordnung der ersten und zweiten Laser 2, 3 und einen hiermit verbundenen geneigten Verlauf der ersten und zweiten Laserstrahlen zum ebenen Untergrund 17, auf dem das Kreuzlasergerät aufgestellt ist, werden von den ersten und zweiten Laserstrahlen auf dem Untergrund 17 erste und zweite Markierungslinien 4, 5 dargestellt, und zwar beginnend in einem relativ geringen Abstand vom ersten und zweiten Lichtauslass 6, 7.

Die ersten und zweiten Laserstrahlen bzw. die von ihnen dargestellten Markierungslinien 4, 5 kreuzen sich im rechten Winkel an einem Kreuzungspunkt 8. Der Abstand zwischen dem ersten Lichtauslass 6 und dem Kreuzungspunkt 8 ist vorzugsweise gleich dem Abstand zwischen dem zweiten Lichtauslass 7 und dem Kreuzungspunkt 8. Beispielsweise betragen diese Längen jeweils 75 mm.

Im gezeigten Ausführungsbeispiel sind innerhalb des Gehäuses 1 weiters dritte und vierte Laserdioden aufweisende Laser 9, 10 angeordnet, welche dritte und vierte Laserstrahlen erzeugen, die durch hintere dritte und vierte Lichtauslässe 13, 14 aus dem Gehäuse 1 austreten. Die dritten und vierten Lichtauslässe 13, 14 werden wiederum von Fenstern gebildet. Durch eine geneigte Anordnung der dritten und vierten Laser 9, 10 analog zu den ersten und zweiten Lasern 2, 3 werden von den geneigt zum Untergrund 17 verlaufenden dritten und vierten Laserstrahlen dritte und vierte Markierungslinien 11, 12 dargestellt, und zwar beginnend in einem geringen Abstand vom jeweiligen Lichtauslass 13, 14. Die dritte Markierungslinie 11 und die erste Markierungslinie 4 verlaufen in der gemeinsamen ersten Geraden 15 und die vierte Markierungslinie 12 und die zweite Markierungslinie 5 verlaufen in der gemeinsamen zweiten Geraden 16. Die dritten und vierten Markierungslinien 11, 12 setzen somit die ersten und zweiten Markierungslinien 4, 5 auf der Rückseite des Gehäuses 1 fort.

Die Längen der ersten und zweiten Markierungslinien 4, 5 betragen vorzugsweise jeweils zumindest 4 m. Auch die Längen der dritten und vierten Markierungslinien 11, 12 betragen vorzugsweise zumindest 4 m.

Die Abstände zwischen den ersten und zweiten Lichtauslässen 6, 7 und dem Beginn der jeweiligen zugehörigen ersten und zweiten Markierungslinie 4, 5 betragen vorzugsweise weniger als 25 mm, beispielsweise etwa 10 bis 15 mm. Jedenfalls ist es bevorzugt, dass der Kreuzungspunkt 8 von den Markierungslinien 4, 5 dargestellt wird.

Die Abstände zwischen den dritten und vierten Lichtauslässen 13, 14 und dem Beginn der jeweiligen zugehörigen Markierungslinie 11, 12 betragen vorzugsweise weniger als 25 mm, beispielsweise etwa 10 bis 15 mm.

Somit wird ein nahezu vollständig geschlossenes Kreuz auf dem Untergrund 17 dargestellt.

Unterhalb des Gehäuses 1 sind erste und zweite Freiräume 18, 19 ausgebildet. lm Bereich dieser Freiräume 18, 19 ist das Gehäuse 1 des auf den ebenen Untergrund 17 aufgestellten Kreuzlasergeräts von diesem Untergrund 17 beabstandet, so dass Bodenbelagselemente, beispielsweise Fliesen in diese Freiräume 18, 19 unter das Gehäuse 1 eingeschoben werden können. Dadurch wird die Ausrichtung der Bodenbelagselemente an den Markierungslinien 4, 5, 11, 12 bzw. ihren gedachten Verlängerungen unter das Gehäuse 1 erleichtert.

Der erste Freiraum 18 erstreckt sich vom ersten Seitenrand 20 des Gehäuses 1 zumindest bis zu einer ersten Vertikalebene 22, in der die erste Markierungslinie 4 liegt. Der zweite Freiraum 19 erstreckt sich von einem zweiten Seitenrand 21 des Gehäuses zumindest bis zu einer zweiten Vertikalebene 23, in der die zweite Markierungslinie 5 liegt. Hierbei verläuft der jeweilige Freiraum 18, 19 durchgehend über den gesamten Bereich, der zwischen der jeweiligen Vertikalebene 22, 23 und dem benachbarten Seitenrand 20, 21 liegt und zwar über die gesamte Länge des jeweiligen Seitenrandes 20, 21 und der gesamten Länge der jeweiligen Vertikalebene 22, 23, über welche sie das Gehäuse 1 durchsetzt.

Diese Freiräume 18, 19 werden ausgebildet, indem das Gehäuse 1 mittels Füßen 24, 25, 26 auf dem Untergrund aufgestellt ist, durch welche die Unterseite des Gehäuses 1 vom Untergrund 17 beabstandet wird, wobei diese Füße 24, 25, 26 günstigerweise nur im Bereich zwischen der ersten und zweiten Vertikalebene 22, 23 angeordnet sind.

Im gezeigten Ausführungsbeispiel sind drei solche Füße 24, 25, 26 vorhanden, die an den Ecken eines gedachten Dreiecks liegen. Zwei dieser Füße 24, 25 können vorzugsweise in der Höhe einstellbar sein, um eine horizontale Ausrichtung des Gehäuses 1 zu ermöglichen. Hierbei kann die horizontale Ausrichtung mittels einer Libelle 27 (oder mehrerer Libellen) kontrolliert werden.

Beispielsweise können zur Verstellung der Höhen der Füße 24, 25 wie dargestellt Stellräder 28, 29 dienen, die aus dem Gehäuse 1 auf dessen Rückseite herausstehen.

Auch können alle Füße 24, 25, 26 höhenverstellbar ausgebildet sein. Auch mehr als drei Füße 24, 25, 26 können vorgesehen sein.

Denkbar und möglich ist auch eine selbstnivellierende Ausbildung des Kreuzlasergeräts, wobei die höhenverstellbaren Füße motorisch verstellbar ausgebildet sein können.

Die Höhen h des ersten und zweiten Freiraums 18, 19, also der Abstand der Gehäuseunterseite vom Untergrund 17 im Bereich des ersten bzw. zweiten Freiraums 18, 19, sind an die Dicke der zu verlegenden Bodenbelagselemente angepasst. Günstigerweise beträgt die Höhe h über die gesamte Ausdehnung der ersten und zweiten Freiräume 18, 19 mindestens 10 mm.

Die Vorderseite 30 und die Rückseite 31 des Gehäuses 1 weisen im gezeigten Ausführungsbeispiel in Draufsicht gesehen kreisbogenförmige Verläufe auf, mit dem Kreuzungspunkt 8 als jeweiligem Kreismittelpunkt.

Die ersten und zweiten Seitenränder 20, 21 sind in Draufsicht gesehen günstigerweise im Wesentlichen parallel zu den ersten und zweiten Markierungslinien 4, 5 ausgerichtet. Ihre Abweichungen von der parallelen Ausrichtung sind vorzugsweise kleiner als 15°.

Denkbar und möglich wäre es auch, die Oberfläche des Gehäuses 1 entlang der Schnittlinien mit den ersten und zweiten Vertikalebenen 22, 23 mit ersten und zweiten Linienmarkierungen zu versehen.

Zur Anpassung an die jeweilige Anwendung können die vom ersten und dritten Laserstrahl und die vom zweiten und vierten Laserstrahl gebildeten Markierungslinien 4, 11; 5, 12 getrennt schaltbar sein. Auch eine getrennte Schaltung des ersten und dritten Laserstrahls ebenso wie eine getrennte Schaltung des zweiten und vierten Laserstrahls kann vorgesehen sein.

Ein erfindungsgemäßes Kreuzlasergerät ist auch zur Verlegung von Belagselementen an Wänden und/oder Decken einsetzbar, z. B. für Wandfliesen und/oder Deckenpaneele, wobei die Anbringung des Kreuzlasergeräts an der Wand oder Decke in an sich bekannter Weise mittels einer geeigneten Halterung durchführbar ist.

Unterschiedliche weitere Modifikationen des gezeigten Ausführungsbeispiels der Erfindung sind denkbar und möglich, ohne den Bereich der Erfindung zu verlassen. So könnten beispielsweise die durch dritte und vierte Lichtauslässe 13, 14 aus dem Gehäuse austretenden Laserstrahlen zur Darstellung der dritten und vierten Markierungslinien 11, 12 durch Teilung und Umlenkung der von den ersten und zweiten Lasern 2, 3 ausgesandten Laserstrahlen ausgebildet werden.

### Legende zu den Hinweisziffern:

- 1: Gehäuse
- 2: erster Laser
- 3: zweiter Laser
- 4: erste Markierungslinie
- 5: zweite Markierungslinie
- 6: erster vorderer Lichtauslass
- 7: zweiter vorderer Lichtauslass
- 8: Kreuzungspunkt
- 9: dritter Laser
- 10: vierter Laser
- 11: dritte Markierungslinie
- 12: vierte Markierungslinie
- 13: dritter Lichtauslass
- 14: vierter Lichtauslass
- 15: erste Gerade
- 16: zweite Gerade
- 17: Untergrund
- 18: erster Freiraum
- 19: zweiter Freiraum
- 20: erster Seitenrand
- 21: zweiter Seitenrand
- 22: erste Vertikalebene
- 23: zweite Vertikalebene
- 24: Fuß
- 25: Fuß
- 26: Fuß
- 27: Libelle
- 28: Stellrad
- 29: Stellrad
- 30: Vorderseite
- 31: Rückseite

## Patentansprüche

1. Kreuzlasergerät für das Verlegen von platten- oder brettförmigen Bodenbelagselementen, insbesondere Fliesen, auf einem ebenen Untergrund (17), mit einem auf dem Untergrund (17) aufstellbaren Gehäuse (1), innerhalb von dem zumindest ein erster und ein zweiter Laser (2, 3) angeordnet sind, von denen durch erste und zweite vordere Lichtauslässe (6, 7) des Gehäuses (1) aus diesem austretende erste und zweite Laserstrahlen zur Ausbildung von ersten und zweiten Markierungslinien (4, 5) auf dem Untergrund (17) erzeugbar sind, welche sich an einem von den Lichtauslässen (6, 7) beabstandeten Kreuzungspunkt (8) im rechten Winkel kreuzen, **dadurch gekennzeichnet, dass** das Gehäuse (1) mittels Füßen (24, 25, 26) des Kreuzlasergerätes auf dem Untergrund (17) aufstellbar ist, wodurch eine Unterseite des Gehäuses (1) vom Untergrund (17) beabstandet ist, wenn das Gehäuse (1) mittels der Füße (24, 25, 26) auf dem Untergrund aufgestellt ist, wobei sich unterhalb des Gehäuses (1) von einem ersten Seitenrand (20) des Gehäuses (1) zumindest bis zu einer ersten Vertikalebene (22), in der der erste Laserstrahl liegt, ein erster Freiraum (18) erstreckt, der sich durchgehend über den gesamten zwischen der ersten Vertikalebene (22) und dem benachbarten ersten Seitenrand (20) liegenden Bereich ausdehnt, und dass sich unterhalb des Gehäuses von einem zweiten Seitenrand (21) des Gehäuses zumindest bis zu einer zweiten Vertikalebene (23), in der der zweite Laserstrahl liegt, ein zweiter Freiraum (19) erstreckt, der sich durchgehend über den gesamten zwischen der zweiten Vertikalebene (23) und dem benachbarten zweiten Seitenrand (21) liegenden Bereich ausdehnt.

2. Kreuzlasergerät nach Anspruch 1, **dadurch gekennzeichnet, dass** die Abstände zwischen den ersten und zweiten Lichtauslässen (6, 7) des Gehäuses (1) und dem Kreuzungspunkt (8) jeweils mindestens 30 mm, vorzugsweise mindestens 50 mm betragen.

3. Kreuzlasergerät nach Anspruch 1 oder 2, **dadurch gekennzeichnet, dass** das Kreuzlasergerät weiters dritte und vierte Laser (9, 10) aufweist, von denen durch dritte und vierte Lichtauslässe (13, 14) aus dem Gehäuse (1) austretende dritte und vierte Laserstrahlen zur Ausbildung von dritten und vierten Markierungslinien (11, 12) erzeugbar sind, wobei die erste und die dritte Markierungslinie (4, 11) in einer gemeinsamen ersten Geraden (15) und die zweite und die vierte Markierungslinie (5, 12) in einer gemeinsamen zweiten Geraden (16) liegen.

4. Kreuzlasergerät nach Anspruch 3, **dadurch gekennzeichnet, dass** von den dritten und vierten Laserstrahlen auf dem ebenen Untergrund (17) Markierungslinien (11, 12) von mindestens 4 m Länge ausbildbar sind.

5. Kreuzlasergerät nach einem der Ansprüche 1 bis 4, **dadurch gekennzeichnet, dass** die ersten und zweiten Freiräume (18, 19) über ihre gesamten Ausdehnungen unterhalb des Gehäuses (1) Höhen von mindestens 7 mm, vorzugsweise von mehr als 10 mm aufweisen.

6. Kreuzlasergerät nach einem der Ansprüche 1 bis 5, **dadurch gekennzeichnet, dass** von den ersten und zweiten Laserstrahlen auf den Untergrund (17) Markierungslinien (4, 5) von mindestens 4 m Länge ausbildbar sind.

7. Kreuzlasergerät nach einem der Ansprüche 1 bis 6, **dadurch gekennzeichnet, dass** die Vorderseite (30) des Gehäuses (1) in Draufsicht gesehen einen kreisbogenförmigen Verlauf aufweist, wobei der Mittelpunkt dieses Kreisbogens vorzugsweise mit dem Kreuzungspunkt (8) der ersten und zweiten Markierungslinien (4, 5) zusammenfällt.

8. Kreuzlasergerät nach einem der Ansprüche 1 bis 7, **dadurch gekennzeichnet, dass** die Rückseite des Gehäuses (1) in Draufsicht gesehen einen kreisbogenförmigen Verlauf aufweist, wobei der Mittelpunkt dieses Kreisbogens vorzugsweise mit dem Kreuzungspunkt (8) der ersten und zweiten Markierungslinien (4, 5) zusammenfällt.

9. Kreuzlasergerät nach einem der Ansprüche 1 bis 8, **dadurch gekennzeichnet, dass** die ersten und zweiten Seitenränder (20, 21) in Draufsicht gesehen im Wesentlichen parallel zu den ersten und zweiten Markierungslinien (4, 5) verlaufen.

10. Kreuzlasergerät nach einem der Ansprüche 1 bis 9, **dadurch gekennzeichnet, dass** die Füße (24, 25, 26) nur im Bereich zwischen der ersten und zweiten Vertikalebene (22, 23) angeordnet sind.

## Claims

1. A cross line laser apparatus for the laying of plate-shaped or board-shaped floor covering elements, in particular tiles, on an even substrate (17), having a housing (1), able to be placed on the substrate (17), within which there are arranged at least a first and a second laser (2, 3) by which first and second laser beams, issuing from the housing (1) through first and second front light outlets (6, 7) of the housing (1), can be produced to form, on the substrate (17), first and second marking lines (4, 5) intersecting at a right angle at an intersection point (8) at a distance from the light outlets (6, 7), **characterised in that** the housing (1) can be placed on the substrate (17) by means of feet (24, 25, 26) of the cross line laser apparatus, whereby an underside of the housing (1) is at a distance from the substrate (17) when the housing (1) is placed on the substrate by means of the feet (24, 25, 26), wherein a first clearance (18) extends underneath the housing (1) from a first lateral edge (20) of the housing (1) at least as far as a first vertical plane (22) in which the first laser beam lies, which clearance (18) extends continuously over the entire region lying between the first vertical plane (22) and the adjacent first lateral edge (20), and **in that** a second clearance (19) extends underneath the housing from a second lateral edge (21) of the housing at least as far as a second vertical plane (23) in which the second laser beam lies, which clearance (19) extends continuously over the entire region lying between the second vertical plane (23) and the adjacent second lateral edge (21).

2. A cross line laser apparatus according to claim 1, **characterised in that** the distances between the first and second light outlets (6, 7) of the housing (1) and the intersection point (8) are in each case at least 30 mm, preferably at least 50 mm.

3. A cross line laser apparatus according to claim 1 or 2, **characterised in that** the cross line laser apparatus furthermore has third and fourth lasers (9, 10) by which third and fourth laser beams, issuing from the housing (1) through third and fourth light outlets (13, 14), can be produced to form third and fourth marking lines (11, 12), wherein the first and the third marking lines (4, 11) lie in a common first straight line (15) and the second and the fourth marking lines (5, 12) lie in a common second straight line (16).

4. A cross line laser apparatus according to claim 3, **characterised in that** marking lines (11, 12) of at least 4 m in length can be formed on the even substrate (17) by the third and fourth laser beams.

5. A cross line laser apparatus according to any one of claims 1 to 4, **characterised in that** the first and second clearances (18, 19) have heights of at least 7 mm, preferably of more than 10 mm, over their entire extension underneath the housing (1).

6. A cross line laser apparatus according to any one of claims 1 to 5, **characterised in that** marking lines (4, 5) of at least 4 m in length can be formed on the substrate (17) by the first and second laser beams.

7. A cross line laser apparatus according to any one of claims 1 to 6, **characterised in that** the course of the front side (30) of the housing (1) has the form of a circular arc in plan view, wherein the centre point of this circular arc preferably coincides with the intersection point (8) of the first and second marking lines (4, 5).

8. A cross line laser apparatus according to any one of claims 1 to 7, **characterised in that** the course of the rear of the housing (1) has the form of a circular arc in plan view, wherein the centre point of this circular arc preferably coincides with the intersection point (8) of the first and second marking lines (4, 5).

9. A cross line laser apparatus according to any one of claims 1 to 8, **characterised in that** the first and second lateral edges (20, 21) run substantially parallel to the first and second marking lines (4, 5) when viewed in plan view.

10. A cross line laser apparatus according to any one of claims 1 to 9, **characterised in that** the feet (24, 25, 26) are only arranged in the region between the first and second vertical plane (22, 23).

## Revendications

1. Appareil à lasers croisés pour la pose d'éléments de couverture de sol en forme de plaques ou de lames, notamment de carreaux sur une assise plane (17) comprenant un boîtier (1) se plaçant sur l'assise (17) logeant au moins un premier et un second laser (2, 3), générant à travers une première et une seconde fenêtre avant de sortie de lumière (6, 7) du boîtier (1), un premier et un second faisceau laser sortant du boitier pour former une première et une seconde ligne de marquage (4, 5) sur l'assise (17), ces lignes de marquage se croisant à angle droit, en un point d'intersection (8) distant des sorties de lumière laser (6, 7), appareil **caractérisé en ce que**
le boîtier (1) s'appuie sur l'assise (17) par les pieds (24, 25, 26) de l'appareil, de sorte que le côté inférieur du boîtier est écarté de l'assise (17) lorsque le boîtier (1) s'appuie sur l'assise par l'intermédiaire des pieds (24, 25, 26),
sous le boîtier (1), à partir d'un premier bord latéral (20) du boîtier (1), au moins jusqu'à un premier plan vertical (22), dans lequel se situe le premier faisceau laser, s'étend un premier espace libre (18) qui se développe en continu sur la zone commune située entre le premier plan vertical (22) et le premier bord latéral voisin (20), et
sous le boîtier, à partir d'un second bord latéral (21) du boîtier, au moins jusque vers un second plan vertical (23) dans lequel se situe le second faisceau laser, s'étend un second espace libre (19) qui se développe en continu sur toute la zone comprise entre le second plan vertical (23) et la seconde paroi latérale voisine (21).

2. Appareil à lasers croisés selon la revendication 1,
**caractérisé en ce que**
les distances entre la première et la seconde sortie de lumière (6, 7) du boîtier (1) et le point d'intersection (8), sont d'au moins 30 mm et de préférence d'au moins 50 mm.

3. Appareil à lasers croisés selon la revendication 1 ou 2,
**caractérisé en ce que**
l'appareil à lasers croisés comporte en outre un troisième et un quatrième laser (9, 10) qui émettent à travers une troisième et une quatrième fenêtre de sortie de lumière (13, 14) du boîtier (1), un troisième et un quatrième faisceau laser pour développer une troisième et une quatrième ligne de marquage (11, 12),
la première et la troisième ligne de marquage (4, 11) étant sur une première droite commune (15) et la seconde et la quatrième ligne de marquage (5, 12) étant sur une seconde droite commune (16).

4. Appareil laser croisé selon la revendication 3,
**caractérisé en ce que**
sur l'assise plane (17), le troisième et le quatrième faisceau laser développent des lignes de marquage (11, 12) d'une longueur d'au moins 4 m.

5. Appareil laser croisé selon l'une des revendications 1 à 4,
**caractérisé en ce que**
sur toute leur extension sous le boîtier (1), le premier et le second espace libre (18, 19) ont une hauteur d'au moins 7 mm et de préférence supérieure à 10 mm.

6. Appareil laser croisé selon l'une des revendications 1 à 5,
**caractérisé en ce que**
le premier et le second faisceau laser développent sur l'assise (17) des lignes de marquage (4, 5) d'une longueur d'au moins 4 m.

7. Appareil laser croisé selon l'une des revendications 1 à 6,
**caractérisé en ce que**
en vue de dessus la face avant (30) du boîtier (1) a un tracé en arc de cercle dont le centre coïncide de préférence avec l'intersection (8) de la première et de la seconde ligne de marquage (4, 5).

8. Appareil laser croisé selon l'une des revendications 1 à 7,
**caractérisé en ce que**
en vue de dessus le dos du boîtier (1) a un tracé en arc de cercle dont le centre coïncide de préférence avec le point d'intersection (8) de la première et de la seconde ligne de marquage (4, 5).

9. Appareil laser croisé selon l'une des revendications 1 à 8,
**caractérisé en ce que**
en vue de dessus le premier et le second bord latéral (20, 21) sont pratiquement parallèles à la première et à la seconde ligne de marquage (4, 5).

10. Appareil laser croisé selon l'une des revendications 1 à 9,
**caractérisé en ce que**
les pieds (24, 25, 26) ne se trouvent que dans la zone comprise entre le premier et le second plan vertical (22, 23).
